# EUROPEAN PATENT APPLICATION

(11) **EP 4 002 646 A1**
(43) Date of publication of application: **25.05.2022**
(21) Application number: 19937698.9
(22) Date of filing: 17.07.2019
(51) Int. Cl.: H02K 1/16

(54) **STATOR, MOTOR, COMPRESSOR, AND AIR CONDITIONER**

(71) Applicant: Mitsubishi Electric Corporation, Tokyo 100-8310 (JP)
(72) Inventor: HIROSAWA, Yuji, Tokyo 100-8310 (JP); NIGO, Masahiro, Tokyo 100-8310 (JP)
(74) Representative: Pfenning, Meinig & Partner mbB
(86) International application number: PCT/JP2019/028036
(87) International publication number: WO 2021/009862

(57) **Abstract**

A stator (2) is a stator disposed outside a rotor of a motor disposed in a compressor used with a refrigerant containing a substance having a property of causing disproportionation. The stator (2) includes a yoke part (21a) and N tooth parts (22a). Each of the N tooth parts (22a) includes a tooth end surface (223a) to face a rotor (3). The stator (2) satisfies 0.75 ≤ (θ1 × N)/360 ≤ 0.97, where θ1 (degrees) is an angle formed by two lines passing through both ends of the tooth end surface (223a) and a rotation center of the rotor (3) in a plane perpendicular to an axial direction of the rotor (3).

## Description

### TECHNICAL FIELD

The present invention relates to a stator of a motor.

### BACKGROUND ART

As a refrigerant of a compressor, a refrigerant including 1,1,2-trifluoroethylene is generally used (see, for example, Patent Reference 1).

### PRIOR ART REFERENCE

### PATENT REFERENCE

Patent Reference 1: International Patent Publication No. 2015/136977

### SUMMARY OF THE INVENTION

### PROBLEM TO BE SOLVED BY THE INVENTION

In conventional techniques, however, depending on structures of a motor in a compressor, a refrigerant might expand to cause a failure in a cylinder in the compressor. As a result, a failure might occur in the compressor.

It is therefore an object of the present invention to solve the problem described above and reduce occurrence of a failure in a compressor.

### MEANS OF SOLVING THE PROBLEM

A stator according to an aspect of the present invention is a stator to be disposed outside a rotor of a motor disposed in a compressor used with a refrigerant containing a substance having a property of causing disproportionation, and the stator includes: a yoke part; and N tooth parts, wherein each of the N tooth parts includes a tooth end surface to face the rotor, and the stator satisfies 0.75 ≤ (θ1 × N)/360 ≤ 0.97, where θ1 (degrees) is an angle formed by two lines passing through both ends of the tooth end surface and a rotation center of the rotor in a plane perpendicular to an axial direction of the rotor.

A motor according to another aspect of the present invention includes: the stator; and the rotor disposed inside the stator.

A compressor according to another aspect of the present invention includes: a closed container; a compression device disposed in the closed container; and the motor to drive the compression device.

An air conditioner according to another aspect of the present invention includes: the compressor; and a heat exchanger.

### EFFECTS OF THE INVENTION

According to the present invention, a failure in a compressor is less likely to occur.

### BRIEF DESCRIPTION OF THE DRAWINGS

FIG. 1 is a cross-sectional view schematically illustrating an internal structure of a motor including a stator according to a first embodiment of the present invention.
FIG. 2 is a block diagram illustrating a configuration of a driving device.
FIG. 3 is a perspective view schematically illustrating a structure of a divided iron core.
FIG. 4 is a plan view schematically illustrating a structure of a stator core.
FIG. 5 is a cross-sectional view schematically illustrating a structure of the divided iron core.
FIG. 6 is a plan view schematically illustrating a structure of an iron core part.
FIG. 7 is a perspective view schematically illustrating a structure of the iron core part.
FIG. 8 is a cross-sectional view schematically illustrating a structure of a rotor.
FIG. 9 is a diagram illustrating a structure of a tooth part.
FIG. 10 is a cross-sectional view schematically illustrating another example of the motor.
FIG. 11 is a cross-sectional view schematically illustrating still another example of the motor.
FIG. 12 is a plan view schematically illustrating an example of a metal member.
FIG. 13 is a diagram illustrating another example of the rotor.
FIG. 14 is a graph showing a relationship between a rotation angle of the rotor and an internal pressure of a cylinder.
FIG. 15 is a graph showing a relationship between an aperture angle proportion [%] and a torque ripple ratio [%] in a case where the motor is driven with a torque less than or equal to a rated torque.
FIG. 16 is a diagram illustrating a magnetic flux density in a stator core in the case where the motor is driven with a torque less than or equal to the rated torque.
FIG. 17 is a diagram illustrating a magnetic flux density in a stator core in a case where the motor is driven with a torque larger than the rated torque.
FIG. 18 is a graph showing a relationship between an aperture angle proportion [%] and a torque ripple ratio [%] in the case where a motor is driven with a torque larger than the rated torque.
FIG. 19 is a cross-sectional view schematically illustrating a structure of a compressor according to a second embodiment of the present invention.
FIG. 20 is a diagram schematically illustrating a configuration of a refrigeration air conditioning apparatus according to a third embodiment of the present invention.

### MODE FOR CARRYING OUT THE INVENTION

### FIRST EMBODIMENT

In an xyz orthogonal coordinate system shown in each drawing, a z-axis direction (z axis) represents a direction parallel to an axis A1 of a motor 1, an x-axis direction (x axis) represents a direction perpendicular to the z-axis direction (z axis), and a y-axis direction (y axis) represents a direction perpendicular to both the z-axis direction and the x-axis direction. The axis A1 is a rotation center of a rotor 3. The axis A1 also represents a center of a stator 2. The direction parallel to the axis A1 is also referred to as an "axial direction of the motor 1," "axial direction of the rotor 3," or simply as an "axial direction." A radial direction refers to a radial direction of the rotor 3 or the stator 2, and is a direction perpendicular to the axis A1. An xy plane is a plane perpendicular to the axial direction. An arrow D1 represents a circumferential direction about the axis A1. A circumferential direction of the rotor 3 or the stator 2 will also be referred to as a "circumferential direction."

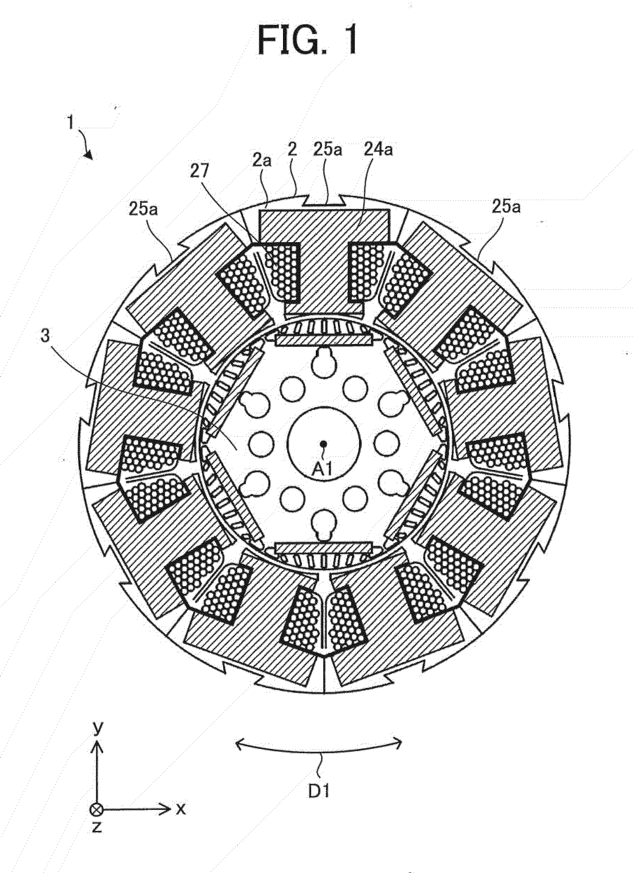

FIG. 1 is a cross-sectional view schematically illustrating an internal structure of the motor 1 including the stator 2 according to a first embodiment of the present invention.

The motor 1 includes the stator 2 and the rotor 3. The motor 1 is, for example, an interior permanent magnet motor.

The motor 1 is a motor disposed in a compressor to be used with a refrigerant containing a substance having a property of causing disproportionation.

For example, the refrigerant described above only needs to contain 1wt% or more of a substance having a property of causing disproportionation. The refrigerant may be a refrigerant composed only of a substance having a property of causing disproportionation. That is, the proportion of the substance having a property of causing disproportionation in the refrigerant described above only needs to be 1wt% to 100wt%.

The substance having a property of causing disproportionation is, for example, 1,1,2-trifluoroethylene or 1,2-difluoroethylene.

For example, the refrigerant described above only needs to contain 1wt% or more of 1,1,2-trifluoroethylene. The refrigerant may be a refrigerant composed only of 1,1,2-trifluoroethylene. That is, the refrigerant only needs to contain 1wt% to 100wt% of 1,1,2-trifluoroethylene.

For example, the refrigerant described above only needs to contain 1wt% or more of 1,2-difluoroethylene. The refrigerant may be a refrigerant composed only of 1,2-difluoroethylene. That is, the refrigerant only needs to contain 1wt% to 100wt% of 1,2-difluoroethylene.

The refrigerant described above may be a mixture of 1,1,2-trifluoroethylene and difluoromethane (also referred to as R32). For example, a mixture containing 40wt% of 1,1,2-trifluoroethylene and 60wt% of R32 may be used as a refrigerant. In this mixture, R32 may be replaced by another substance. For example, a mixture of 1,1,2-trifluoroethylene and another ethylene-based fluorocarbon may be used as a refrigerant. Examples of another ethylene-based fluorocarbon include fluoroethylene (also referred to as HFO-1141), 1,1-difluoroethylene (also referred to as HFO-1132a), trans-1,2-difluoroethylene (also referred to as "HFO-1132(E)"), and cis-1,2-difluoroethylene (also referred to as "HFO-1132(Z)").

R32 may be replaced by any one of 2,3,3,3-tetrafluoropropene (also referred to as R1234yf), trans-1,3,3,3-tetrafluoropropene (also referred to as "R1234ze(E)"), cis-1,3,3,3-tetrafluoropropene (also referred to as "R1234ze(Z)"), 1,1,1,2-tetrafluoroethane (also referred to as R134a), or 1,1,1,2,2-pentafluoroethane (also referred to as R125). R32 may be replaced by a mixture of at least two of R32, R1234yf, R1234ze(E), R1234ze(Z), R134a, and R125.

The stator 2 includes an annular stator core 2a and coils 27 wound around the stator core 2a. The stator 2 is formed in an annular shape in a circumferential direction about the axis A1 (i.e., the rotation center of the rotor 3).

The stator 2 is disposed outside the rotor 3. The rotor 3 is rotatably provided inside the stator 2. An air gap of 0.3 mm to 1 mm is provided between the inner surface of the stator 2 and the outer surface of the rotor 3. When a current is supplied to an inverter to the coils 27 of the stator 2, the rotor 3 rotates. The current supplied to the coils 27 is a current having a frequency in synchronization with an instructed rotation speed.

The stator 2 includes a plurality of divided iron cores 25a. In the example illustrated in FIG. 1, the plurality of divided iron cores 25a are arranged in an annular shape in the circumferential direction about the axis A1 to thereby form the stator 2.

Next, a driving device 101 will be described.

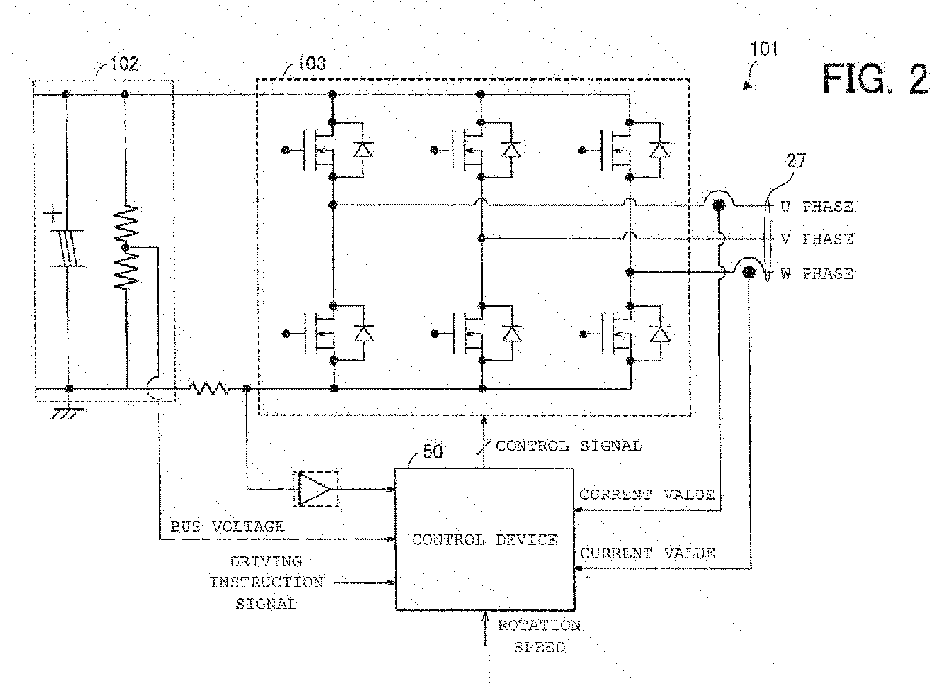

FIG. 2 is a block diagram illustrating a configuration of the driving device 101.

The motor 1 may include the driving device 101 illustrated in FIG. 2. The driving device 101 includes a converter 102 that rectifies an output of a power supply, an inverter 103 that supplies electric power to the stator 2 (specifically, the coils 27) of the motor 1, and a control device 50.

In the example illustrated in FIG. 2, the coils 27 are three-phase coils having a U phase, a V phase, and a W phase.

The converter 102 is supplied with electric power from a power supply that is an alternating current power supply. The converter 102 applies a voltage to the inverter 103. A voltage applied from the converter 102 to the inverter 103 will also be referred to as a "converter voltage." A bus voltage of the converter 102 is supplied to the control device 50.

The inverter 103 operates by a pulse width modulation control method (also referred to as a PWM control method).

An inverter voltage for driving the motor 1, that is, a voltage applied to the coils 27 of the motor 1, is generated by a PWM control method. As described above, the coils 27 of the motor 1 are, for example, three-phase coils. In this case, the inverter 103 includes at least one inverter switch corresponding to each phase, and each inverter switch includes a pair of switching devices (two switching devices in this embodiment).

In the PWM control method, a waveform of an inverter voltage is generated by controlling proportions of on and off times of the inverter switch corresponding to each phase. In this manner, a desired output waveform from the inverter 103 can be obtained. Specifically, in the inverter 103, when the inverter is on, a voltage is supplied from the inverter 103 to the coils 27, and an inverter voltage increases. When the inverter switch is off, a voltage supply from the inverter 103 to the coils 27 is shut off, and the inverter voltage decreases. A difference between the inverter voltage and an induced voltage is supplied to the coils 27, a motor current is generated, and a rotary force of the motor 1 occurs. The proportions of on and off times of the inverter switch is controlled to match with a target motor current value and consequently a desired output waveform from the inverter 103 can be thereby obtained.

An on/off timing of each inverter switch is determined based on a carrier wave. The carrier wave is constituted by a triangular wave having a constant amplitude. A pulse width modulation cycle in the PWM control method is determined by a carrier frequency that is a frequency of a carrier wave. In this embodiment, the control device 50 stores a predetermined pattern of a carrier wave or a predetermined carrier frequency. The control device 50 controls the carrier frequency, and controls on and off of each inverter switch. In this manner, the control device 50 controls an output from the inverter 103 to be supplied to the coils 27.

A carrier frequency that is a frequency of a carrier wave will also be referred to as a "carrier frequency of the inverter 103." That is, the carrier frequency of the inverter 103 is a control frequency of a voltage to be applied to the coils 27, the control device 50 controls the carrier frequency of the inverter 103.

In this embodiment, the inverter 103 includes three inverter switches (i.e., six switching devices), and control on one of the three inverter switches, that is, one inverter switch corresponding the U phase, the V phase, or the W phase, will be described. The control on one inverter switch is also applicable to control on the other two inverter switches.

The control device 50 compares a voltage value of a carrier wave with an inverter output voltage instruction value. The inverter output voltage instruction value is calculated based on a target motor current value in the control device 50, for example. The inverter output voltage instruction value is set based on, for example, a driving instruction signal input to the control device 50 from a remote controller of a refrigeration air conditioning apparatus such as an air conditioner.

If a voltage value of a carrier wave is smaller than the inverter output voltage instruction value, the control device 50 turns a PWM control signal so that an inverter switch is turned on. If a voltage value of a carrier wave is greater than or equal to the inverter output voltage instruction value, the control device 50 turns the PWM control signal off so that the inverter switch is turned off. Accordingly, the inverter voltage approaches a target value.

As described above, the control device 50 generates a PWM control signal based on a difference between the inverter output voltage instruction value and a voltage value of a carrier wave.

The control device 50 outputs a control signal such as an inverter driving signal based on a PWM control signal to the inverter 103, and performs on/off control of the inverter switch. The inverter driving signal may be the same as the PWM control signal, or may be different from the PWM control signal.

While the inverter switch is on, an inverter voltage is output from the inverter 103. The inverter voltage is supplied to the coils 27, a motor current (specifically, a U-phase current, a V-phase current, and a W-phase current) is generated in the motor 1. Accordingly, an inverter voltage is converted to a rotary force of the motor 1 (specifically, the rotor 3). The motor current is measured by a measuring instrument such as a current sensor, and a measurement result (e.g., a signal indicating a current value) is transmitted to the control device 50.

The control device 50 is composed of, for example, a processor and a memory. For example, the control device 50 is a microcomputer. The control device 50 may be composed of a processing circuit as dedicated hardware such as a single circuit or a composite circuit.

A structure of the divided iron cores 25a will now be described.

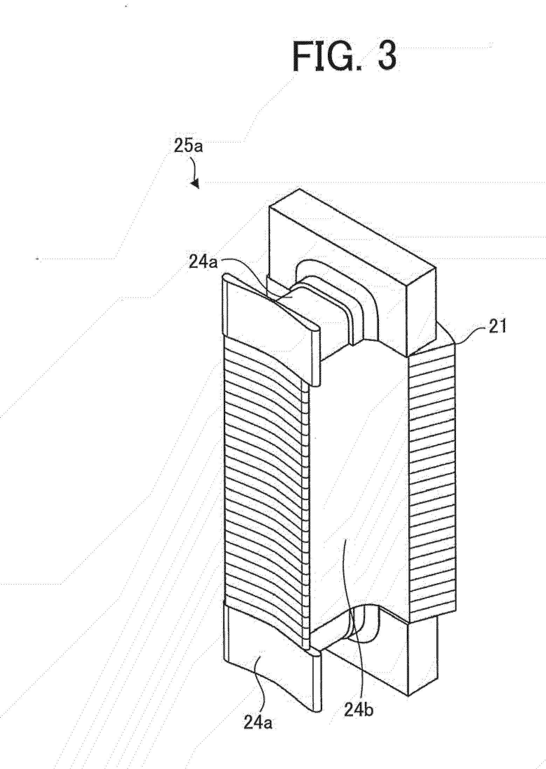

FIG. 3 is a perspective view schematically illustrating a structure of the divided iron core 25a.

In this embodiment, the stator 2 is composed of the plurality of divided iron cores 25a. Each of the divided iron cores 25a includes an iron core part 21 as a divided iron core, first insulators 24a, a second insulator 24b, and a coil 27.

The example illustrated in FIG. 3 does not show the coil 27.

The first insulators 24a are combined with the stator core 2a (specifically, the iron core part 21). In this embodiment, the first insulators 24a are provided at both end of the stator core 2a in the axial direction. The first insulator 24a may be provided at one end of the stator core 2a in the axial direction. In this embodiment, the first insulator 24a is an insulating resin.

The second insulator 24b is, for example, a thin polyethylene terephthalate (PET) film. The PET film has a thickness of, for example, 0.15 mm. The second insulator 24b covers a side surface of a tooth part (a tooth part 22a described later) of the stator core 2a.

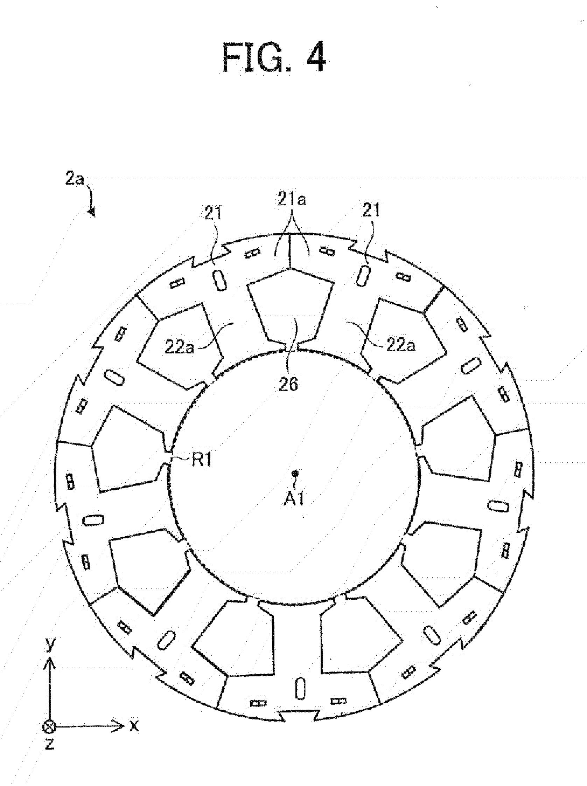

FIG. 4 is a plan view schematically illustrating a structure of the stator core 2a.

The stator core 2a includes at least one yoke part 21a and at least two tooth parts 22a. The stator core 2a is composed of a plurality of iron core parts 21. Thus, each of the iron core parts 21 includes the yoke part 21a and the tooth parts 22a.

In the example illustrated in FIG. 4, the stator core 2a is composed of nine iron core parts 21.

The stator core 2a may not be divided into the plurality of iron core parts 21. In this case, the stator core 2a may be composed of the plurality of iron core parts 21 integrated as one member. For example, the stator core 2a may be formed by laminating a plurality of annular materials (e.g., electromagnetic steel sheets).

A region surrounded by two yoke parts 21a and two tooth parts 22a is a slot part 26. In the stator core 2a, a plurality of slot parts 26 are arranged at regular intervals in the circumferential direction. In the example illustrated in FIG. 4, the stator core 2a has nine slot parts 26.

As illustrated in FIG. 4, the stator core 2a includes the plurality of tooth parts 22a, and each of the tooth parts 22a is adjacent to another tooth part 22a across the slot part 26. Accordingly, the plurality of tooth parts 22a and the plurality of slot parts 26 are alternately arranged in the circumferential direction. The pitch of the plurality of tooth parts 22a arranged in the circumferential direction (i.e., the width of the slot parts 26 in the circumferential direction) is uniform. That is, the plurality of tooth parts 22a are radially positioned.

In this embodiment, the stator 2 includes N divided iron cores 25a (where N is a natural number of two or more). Thus, the stator 2 includes N tooth parts 22a. In the example illustrated in FIG. 1, the stator 2 includes nine divided iron cores 25a. Accordingly, in the example illustrated in FIG. 1, the stator 2 includes nine tooth parts 22a.

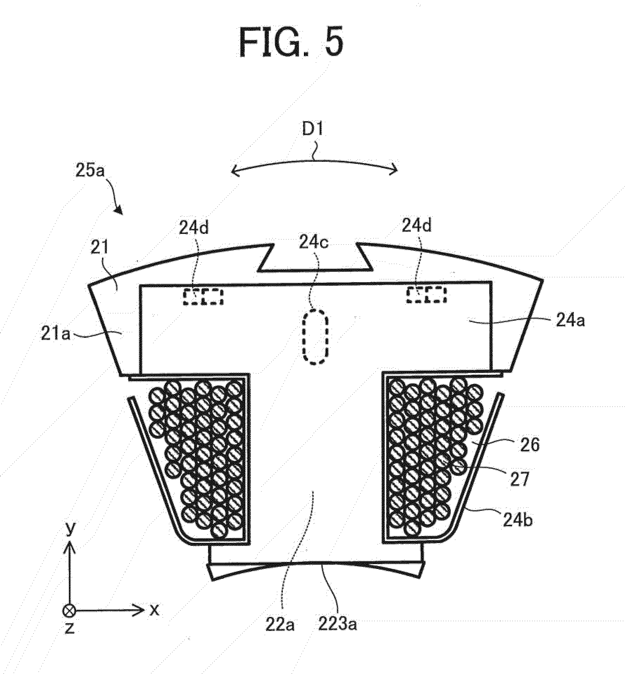

FIG. 5 is a cross-sectional view schematically illustrating a structure of the divided iron core 25a.

Each of the divided iron cores 25a includes the yoke part 21a, the tooth part 22a located at the inner side of the yoke part 21a in the radial direction, the coil 27, the first insulator 24a insulating the stator core 2a, and the second insulator 24b insulating the stator core 2a. In this embodiment, the tooth part 22a is integrated with the yoke part 21a as one member, but a tooth part 22a formed as a separate member from the yoke part 21a may be attached to the yoke part 21a.

The coil 27 is wound around the stator core 2a with the first insulator 24a and the second insulator 24b interposed therebetween. Specifically, the coil 27 is wound around the tooth part 22a. When a current flows through the coil 27, a rotating magnetic field is generated from the coil 27.

The coil 27 is, for example, a magnet wire. For example, the stator 2 has three phases, and connection of the coil 27 is, for example, Y connection (also referred to as star connection) or delta connection. The number of turns and the wire diameter of each coil 27 are determined depending on the rotation speed of the motor 1, torque, voltage specifications, and the cross-sectional area of the slot parts 26, for example. The wire diameter of the coil 27 is, for example, 1.0 mm. The coil 27 is wound around each tooth part 22a of the stator core 2a in, for example, 80 turns. The wire diameter and the number of turns of the coil 27 are not limited to these examples.

The winding method of the coils 27 is, for example, concentrated winding. For example, the coils 27 can be wound around the iron core parts 21 in a state before the iron core parts 21 are arranged in the annular shape (e.g., a state where the iron core parts 21 are arranged linearly). The iron core parts 21 (i.e., the divided iron cores 25a) around which the coils 27 are wound are folded in an annular shape and fixed by, for example, welding.

The coils 27 may be attached to the tooth parts 22a of the stator core 2a by distributed winding, instead of concentrated winding.

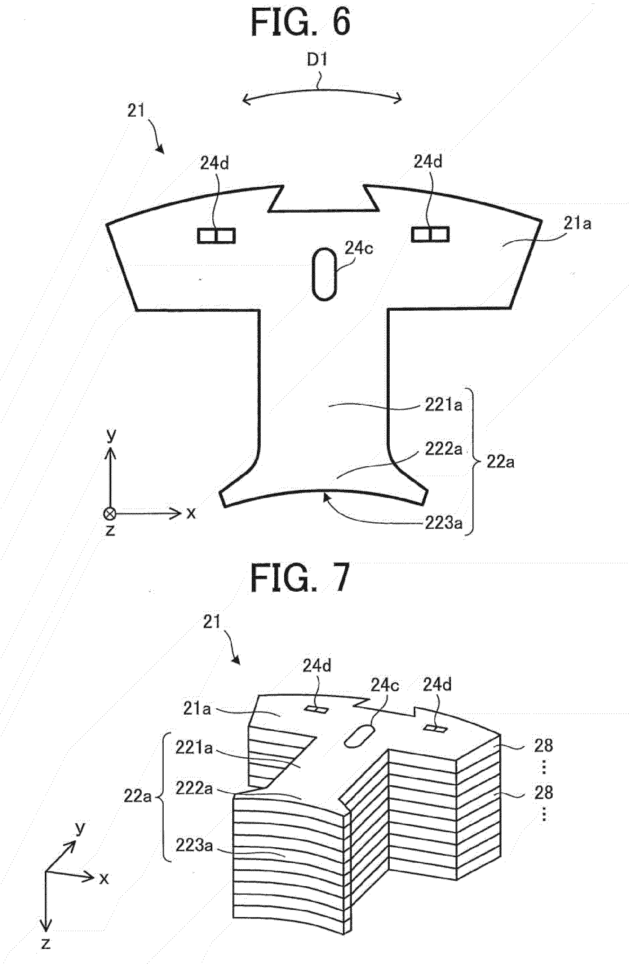

FIG. 6 is a plan view schematically illustrating a structure of the iron core part 21.

FIG. 7 is a perspective view schematically illustrating a structure of the iron core part 21.

The yoke part 21a extends in the circumferential direction, and the tooth part 22a extends inward (in the -y direction in FIG. 6) in the radial direction of the stator core 2a. In other words, the tooth part 22a projects from the yoke part 21a toward the axis A1.

As illustrated in FIGS. 6 and 7, each tooth part 22a includes a body 221a, a tooth tip 222a, and a tooth end surface 223a. The tooth tip 222a is disposed at the tip of the tooth part 22a (specifically, an end of the body 221a) in the radial direction. In the example illustrated in FIGS. 6 and 7, the body 221a has a uniform width in the radial direction. The tooth tip 222a extends in the circumferential direction, and is formed to expand in the circumferential direction.

The tooth end surface 223a faces the rotor 3 in the motor 1. Specifically, the tooth end surface 223a is a surface of the tooth tip 222a facing the rotor 3 in the motor 1.

As illustrated in FIGS. 5 through 7, the iron core part 21 (e.g., the yoke part 21a) has a fixing hole 24c for fixing the first insulator 24a.

As illustrated in FIG. 7, the iron core part 21 is constituted by at least one sheet 28 (also referred to as a plate). In this embodiment, the iron core part 21 is formed by laminating a plurality of sheets 28 in the axial direction (i.e., in the z-axis direction).

The sheets 28 are formed in a predetermined shape by press work (specifically, punching). The sheets 28 are, for example, electromagnetic steel sheets. In the case of using electromagnetic steel sheets as the sheets 28, each of the sheets 28 has a thickness of, for example, 0.01 mm through 0.7 mm. In this embodiment, the thickness of each sheet 28 is 0.35 mm. Each of the sheets 28 is fixed to its adjacent sheet 28 by caulked parts 24d.

A structure of the rotor 3 will now be described.

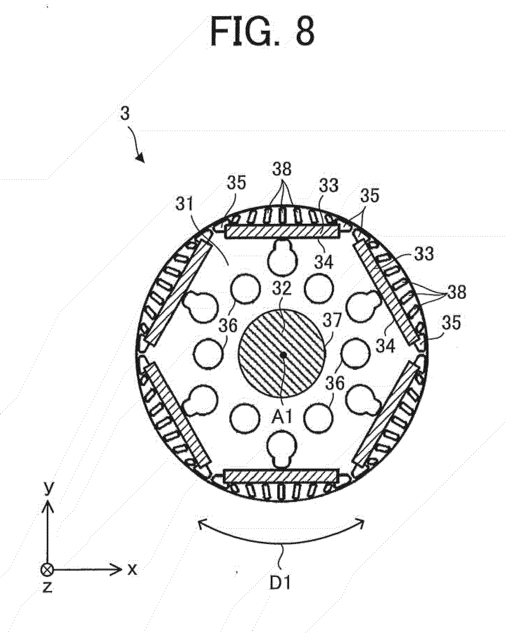

FIG. 8 is a cross-sectional view schematically illustrating the structure of the rotor 3.

The rotor 3 includes a rotor core 31, a shaft 32, at least one permanent magnet 33, at least one magnet insertion hole 34, at least one flux barrier 35, at least one air opening 36, and at least one slit 38. The rotor 3 is rotatable about the axis A1. The rotor 3 is rotatably disposed inside the stator 2. The axis A1 is the rotation center of the rotor 3, and is the axis of the shaft 32.

In this embodiment, the rotor 3 is an interior permanent magnet rotor. The rotor core 31 has a plurality of magnet insertion holes 34 arranged in the circumferential direction of the rotor 3. The magnet insertion holes 34 are space in which the permanent magnets 33 are arranged. One permanent magnet 33 is disposed in each of the magnet insertion holes 34. A plurality of permanent magnets 33 may be disposed in each of the magnet insertion holes 34. The permanent magnets 33 disposed in the magnet insertion holes 34 are magnetized in the radial direction of the rotor 3 (i.e., the direction perpendicular to the axis A1). The number of magnet insertion holes 34 corresponds to the number of magnetic poles of the rotor 3. The positional relationships of the magnetic poles are the same. In this embodiment, the number of magnetic poles of the rotor 3 is six. The number of magnetic poles of the rotor 3 only needs to be two or more.

Rare earth magnets containing neodymium (Nd), iron (Fe), and boron (B) (hereinafter referred to as "Nd-Fe-B permanent magnets"), for example, are applied to the permanent magnets 33.

A coercive force of the Nd-Fe-B permanent magnets has a property of decreasing depending on the temperature. For example, in the case of using a motor employing Nd rare earth magnets at a high temperature atmosphere of 100°C or more, such as the case of a compressor, a coercive force of the magnets decreases by about -0.5 to -0.6%/ΔK depending on the temperature, and thus, a dysprosium (Dy) element needs to be added in order to increase the coercive force. The coercive force increases substantially in proportion to the content of the Dy element. In a general compressor, the upper limit of an ambient temperature of a motor is about 150°C, and the motor is used in a temperature rise range of about 130°C with respect to 20°C. For example, the coercive force decreases by 65% at a temperature coefficient of -0.5%/ΔK.

To prevent demagnetization with a maximum load of a compressor, a coercive force of about 1100 to 1500 A/m is needed. To assure a coercive force in an ambient temperature of 150°C, a coercive force at room temperature needs to be designed at about 1800 to 2300 A/m.

In a state where no Dy element is added to Nd-Fe-B permanent magnets, the coercive force at room temperature is about 1800 A/m. To obtain a coercive force of about 2300 kA/m, about 2wt% of the Dy element needs to be added. However, when the Dy element is added, a coercive force property is enhanced, but a remaining magnetic flux density property decreases. When the remaining magnetic flux density decreases, a magnet torque of the motor decreases and a supply current increases. Accordingly, a copper loss increases. Thus, in consideration of motor efficiency, it is desired to reduce the amount of Dy addition.

The rotor core 31 is formed by laminating a plurality of electromagnetic steel sheets. Each of the electromagnetic steel sheets of the rotor core 31 has a thickness of, for example, 0.1 mm to 0.7 mm. In this embodiment, the thickness of each electromagnetic steel sheet of the rotor core 31 is 0.35 mm. Each of the electromagnetic steel sheets of the rotor core 31 is fixed to its adjacent electromagnetic steel sheet by caulking.

At least one slit 38 is formed outside each magnet insertion hole 34 in the radial direction of the rotor 3. In this embodiment, a plurality of slits 38 are formed outside each magnet insertion hole 34 in the radial direction of the rotor 3. Each of the slits 38 is elongated in the radial direction.

The shaft 32 is coupled to the rotor core 31. For example, the shaft 32 is fixed to a shaft hole 37 formed in the rotor core 31 by a fixing method such as shrink fitting or press fitting. In this manner, rotational energy generated by rotation of the rotor core 31 is transferred to the shaft 32.

The flux barrier 35 is formed at a position adjacent to the magnet insertion hole 34 in the circumferential direction of the rotor 3. In other words, each flux barrier 35 is adjacent to an end portion of a corresponding one of the magnet insertion holes 34 in the longitudinal direction of the magnet insertion hole 34. The flux barrier 35 reduces leakage flux. To prevent a short circuit of magnetic flux between adjacent magnetic poles, the width of a thin portion between the flux barrier 35 and the outer peripheral surface of the rotor core 31 is preferably small. The width of the thin portion between the flux barrier 35 and the outer peripheral surface of the rotor core 31 is, for example, 0.35 mm. The air opening 36 is a through hole. For example, in a case where the motor 1 is used in a compressor, a refrigerant is allowed to pass through the air opening 36.

A structure of the tooth part 22a will be specifically described.

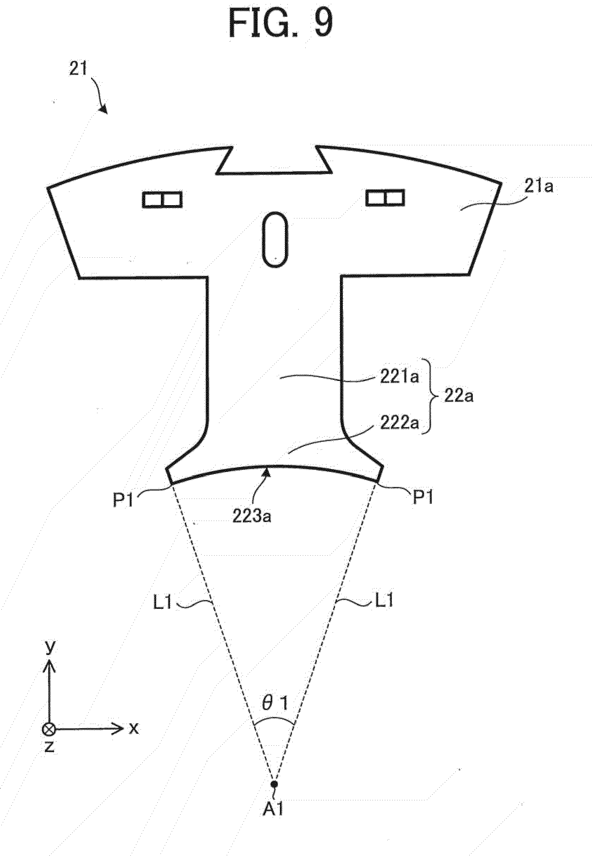

FIG. 9 is a diagram illustrating a structure of the tooth part 22a.

In the xy plane, the stator 2 satisfies 0.75 ≤ (θ1 × N)/360 ≤ 0.97, where θ1 (degrees) is an angle formed by two lines L1 passing through both ends PI of the tooth end surface 223a and the rotation center of the rotor 3.

In this embodiment, N = 9. It should be noted that N only needs to be a natural number of two or more.

That is, in the xy plane, a proportion α [%] of the tooth end surface 223a in the circumference of a circle passing through the tooth end surface 223a is 75% or more and 97% or less. This proportion α will be hereinafter referred to as an aperture angle proportion α. The circle passing through the tooth end surface 223a is, for example, a circle indicated by the broken line R1 in FIG. 4.

### First Variation

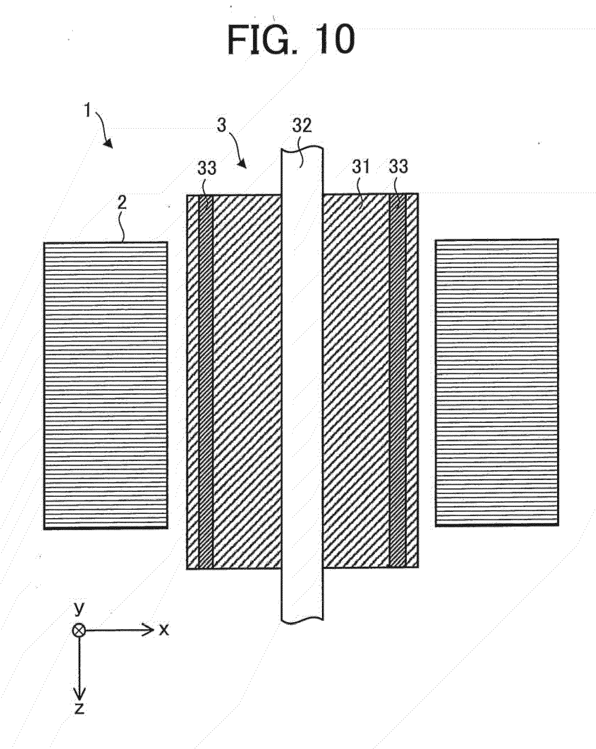

FIG. 10 is a cross-sectional view schematically illustrating another example of the motor 1.

In the axial direction of the rotor 3, the rotor 3 is longer than the stator 2. In this case, the rotor 3 only needs to be longer than the stator core 2a.

### Second Variation

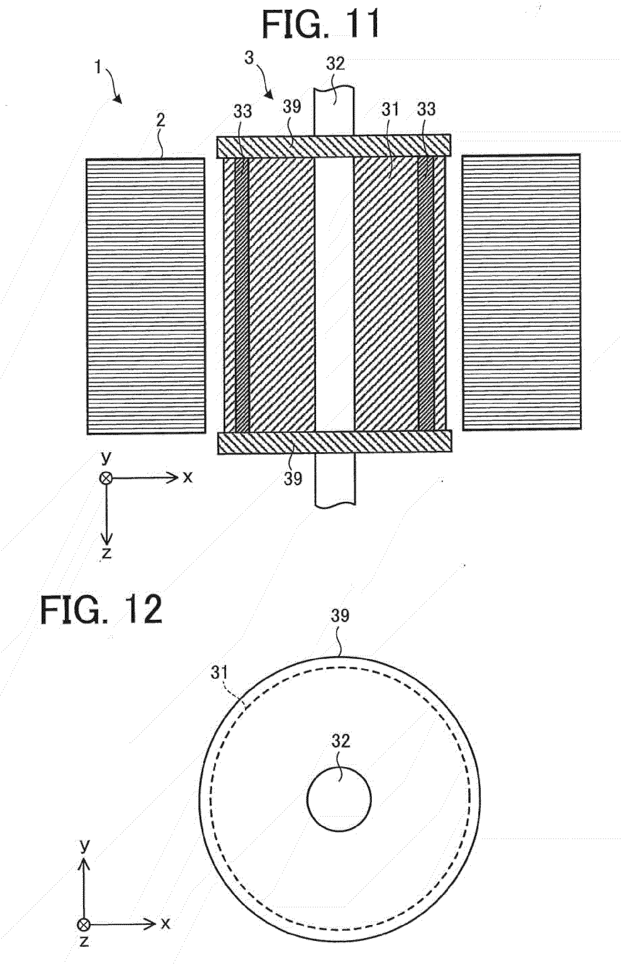

FIG. 11 is a cross-sectional view schematically illustrating still another example of the motor 1.

FIG. 12 is a plan view schematically illustrating an example of the metal member 39.

In the second variation, the rotor 3 includes at least one metal member 39. The metal member 39 is fixed to an end of the rotor core 31 in the axial direction of the rotor 3.

In the example illustrated in FIGS. 11 and 12, the rotor 3 includes two metal members 39, and the metal members 39 are fixed to both ends of the rotor core 31. Each of the metal members 39 is preferably a single structure. Accordingly, costs for the metal members 39 can be reduced.

In the xy plane, a surface area of each metal member 39 is larger than a surface area of the rotor core 31 (specifically, the surface of the rotor core 39 facing the metal member 39).

### Third Variation

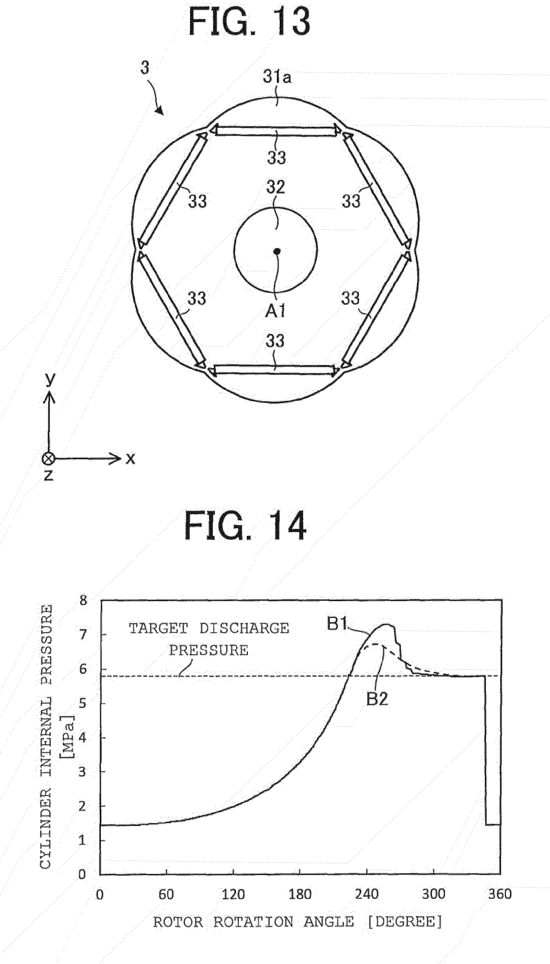

FIG. 13 is a diagram illustrating another example of the rotor 3.

The rotor 3 may include a rotor core 31a illustrated in FIG. 13, instead of the rotor core 31. The rotor core 31a illustrated in FIG. 13 has a plurality of different radiuses in the xy plane. Specifically, the radius of the rotor core 31a is at maximum in magnetic pole center parts of the rotor 3 and at minimum in inter-pole parts of the rotor 3. In the example illustrated in FIG. 13, the outer diameter of the rotor core 31a is at maximum in magnetic pole center parts of the rotor 3 and at minimum in inter-pole parts of the rotor 3. In the xy plane illustrated in FIG. 13, each of the magnetic pole center parts of the rotor 3 is located on a line passing through the center of the corresponding permanent magnet 33 and the axis A1. In the xy plane illustrated in FIG. 13, each of the inter-pole parts of the rotor 3 is located on a line passing through a point between adjacent permanent magnets 33 and the axis A1.

Advantages of the stator 2 according to the first embodiment will now be described below.

FIG. 14 is a graph showing a relationship between a rotation angle of the rotor and an internal pressure of a cylinder. In the example illustrated in FIG. 14, the solid line B1 corresponds to a motor having a large torque ripple, and the broken line B2 corresponds to a motor having a small torque ripple.

In general, in a compressor, when compression of a refrigerant starts, the internal pressure of a cylinder increases. When the internal pressure reaches a target discharge pressure satisfying a required capacity, the refrigerant pushes away a valve, and the valve is opened. Accordingly, the cylinder communicates with a discharging muffler, and the refrigerant is discharged from a discharge pipe under a target discharge pressure.

However, in a case where a time lag occurs from when the internal pressure of the cylinder reaches the target discharge pressure to when the valve is completely opened, the internal pressure of the cylinder might exceed the target discharge pressure. This phenomenon is referred to as a "pressure overshoot" in the present application.

When the pressure overshoot occurs, a refrigerant containing a substance having a property of causing disproportionation, such as 1,1,2-trifluoroethylene or 1,2-difluoroethylene, rapidly causes volume expansion due to a chain of disproportionation reactions, and a failure is likely to occur in the cylinder in the compressor. Thus, occurrence of a pressure overshoot is preferably suppressed as much as possible.

In general, in a compressor, as the rotation speed of a motor increases, a period in which a refrigerant is compressed becomes shorter, and an influence of a delay of valve opening increases. That is, as the rotation speed of the motor increases, a pressure overshoot is more likely to occur.

In general, a torque ripple occurs during driving of a motor, the rotation speed of the motor fluctuates during driving of the motor. As an instantaneous rotation speed increases, an instantaneous internal pressure of a cylinder increases, and a failure is more likely to occur in the cylinder.

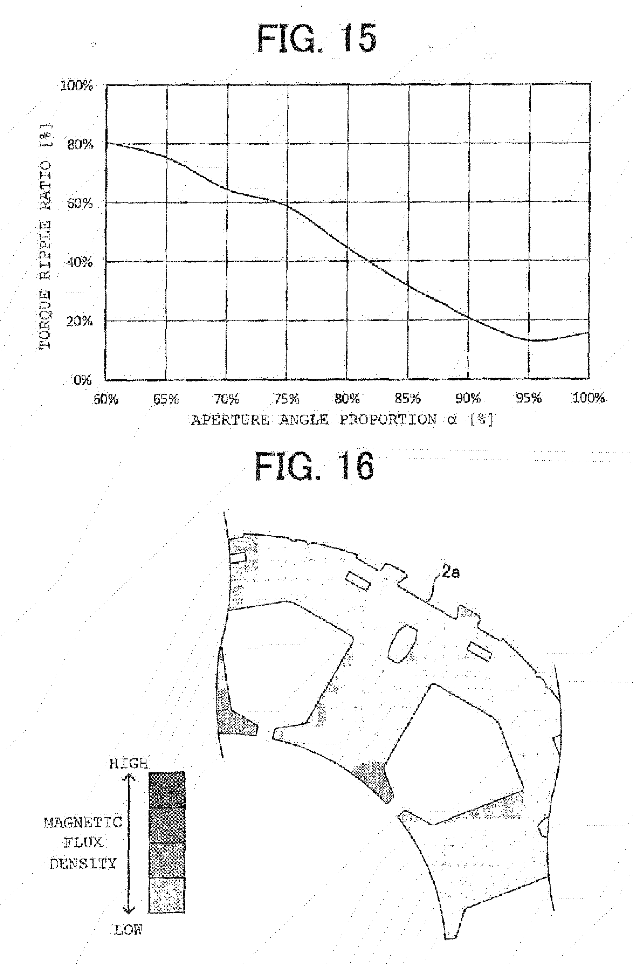

FIG. 15 is a graph showing a relationship between an aperture angle proportion α [%] and a torque ripple ratio [%] in a case where a motor is driven with a torque less than or equal to a rated torque.

FIG. 16 is a diagram illustrating a magnetic flux density in the stator core 2a in the case where a motor is driven with a torque less than or equal to the rated torque.

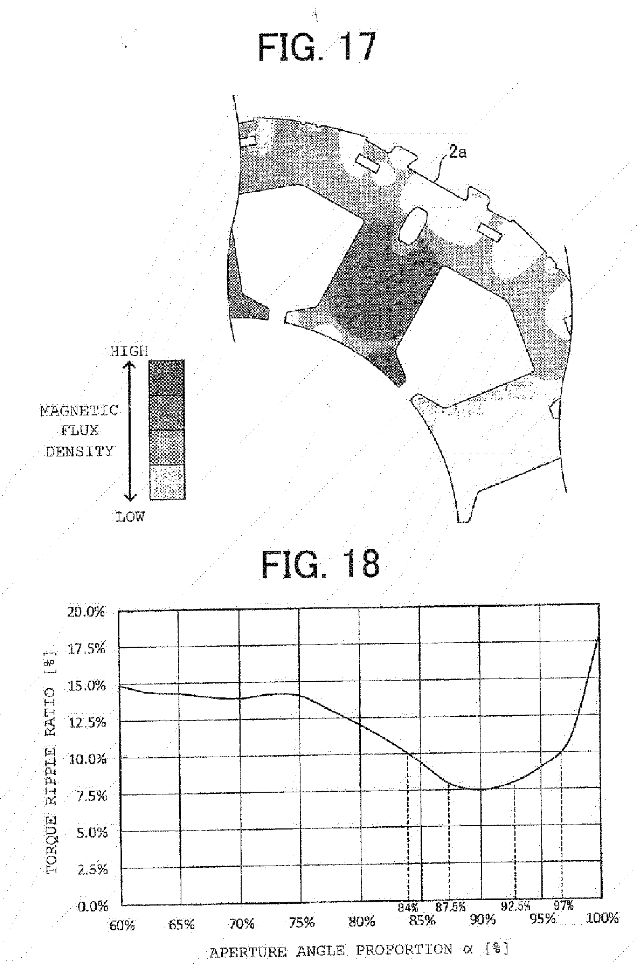

FIG. 17 is a diagram illustrating a magnetic flux density in the stator core 2a in a case where a motor is driven with a torque larger than the rated torque.

As shown in FIG. 15, in the case where the motor is driven with a torque less than or equal to the rated torque, as the angle θ1 shown in FIG. 9 increases, the torque ripple ratio during driving of the motor decreases. The torque ripple ratio is a ratio of a difference between a maximum torque and a minimum torque to a time average torque. As the torque ripple ratio decreases, fluctuation of the rotation speed of the motor during driving of the motor decreases, and a pressure overshoot is less likely to occur. As illustrated in FIG. 16, when a torque load is small, influence of magnetic saturation in each tooth part is small. On the other hand, as illustrated in FIG. 17, when a torque load is large, magnetic saturation in each tooth part increases. For example, when a torque load is large in the motor in the compressor, the internal pressure of the cylinder increases. Accordingly, a failure in the compressor due to disproportionation of a refrigerant is likely to occur.

Specifically, the angle θ1 affects a magnetic attraction force generated between the stator and the rotor. Consequently, the angle θ1 affects the torque ripple ratio.

FIG. 18 is a graph showing a relationship between an aperture angle proportion α [%] and a torque ripple ratio [%] in a case where the motor 1 is driven with a torque larger than the rated torque.

As shown in FIG. 18, at an aperture angle proportion α of 75% or more, the torque ripple ratio can be effectively reduced. That is, in the range of 0.75 ≤ (θ1 × N)/360, the torque ripple ratio can be effectively reduced.

At an aperture angle proportion α of 84% or more, the torque ripple ratio can be more effectively reduced. That is, in the range of 0.84 ≤ (θ1 × N)/360, the torque ripple ratio can be more effectively reduced.

At an aperture angle proportion α exceeding 97%, the torque ripple ratio rapidly increases. That is, in the range of (θ1 × N)/360 > 0.97, the torque ripple ratio rapidly increases.

Thus, the aperture angle proportion α is preferably 75% or more and 97% or less. That is, the stator 2 preferably satisfies 0.75 ≤ (θ1 × N)/360 ≤ 0.97. In this manner, the torque ripple ratio can be effectively reduced. As a result, a failure in the compressor is less likely to occur.

The aperture angle proportion α is more preferably 84% or more and 97% or less. That is, the stator 2 more preferably satisfies 0.84 ≤ (θ1 × N)/360 ≤ 0.97. In this manner, the torque ripple ratio can be more effectively reduced. As a result, a failure in the compressor can be much less likely to occur.

Furthermore, the aperture angle proportion α is more preferably 87.5% or more and 92.5% or less. That is, the stator 2 more preferably satisfies 0.875 ≤ (θ1 × N)/360 ≤ 0.925. In this manner, the torque ripple ratio can be more effectively reduced. As a result, a failure in the compressor can be much less likely to occur.

At an aperture angle proportion α of 90%, the torque ripple ratio is at minimum. Thus, when the stator 2 satisfies (θ1 × N)/360 = 0.9, the torque ripple ratio is at minimum. In this case, a failure in the compressor is much less likely to occur.

The aperture angle proportion α may be 87.5% or more and 97% or less. That is, when the stator 2 satisfies 0.875 ≤ (θ1 × N)/360 ≤ 0.97, the torque ripple ratio can be effectively reduced. As a result, a failure in the compressor is less likely to occur.

The aperture angle proportion α may be 87.5% or more and 92.5% or less. That is, when stator 2 satisfies 0.875 ≤ (θ1 × N)/360 ≤ 0.925, the torque ripple ratio can be effectively reduced. As a result, a failure in the compressor is less likely to occur.

The aperture angle proportion α may be 84% or more and 92.5% or less. That is, when the stator 2 satisfies 0.84 ≤ (θ1 × N)/360 ≤ 0.925, the torque ripple ratio can be effectively reduced. As a result, a failure in the compressor is less likely to occur.

In a case where the coils 27 are attached to the tooth parts 22a of the stator core 2a by distributed winding, magnetic flux from the coils 27 is widely dispersed in the stator 2, as compared to concentrated winding. Accordingly, variations of magnetic attraction forces generated between the rotor 3 and the stator 2 during rotation of the rotor 3 becomes gentle, and the torque ripple ratio can be reduced.

In a case where the motor 1 includes an inverter that operates by a PWM control method, waveform of an inverter can be finely adjusted. Accordingly, torque waveform of the motor 1 due to an inverter voltage can be controlled, and the torque ripple ratio can be reduced.

In a case where the rotor 3 is longer than the stator 2 in the axial direction of the rotor 3, the moment of inertia of the rotor 3 can be increased. Accordingly, occurrence of a pressure overshoot can be suppressed. In a case where the stator 2 is shorter than the rotor 3 in the axial direction of the rotor 3, the size of the motor 1 can be reduced. Thus, the size of the compressor including the motor 1 can also be reduced.

In a case where the rotor 3 includes at least one metal member 39, the moment of inertia of the rotor 3 can be increased. Accordingly, occurrence of a pressure overshoot can be suppressed.

In the case where the rotor 3 includes at least one metal member 39, in the xy plane, a surface area of the metal member 39 is preferably larger than a surface area of the rotor core 31 (specifically, the surface of the rotor core 31 facing the metal member 39). Accordingly, the moment of inertia of the rotor 3 can be further increased. As a result, occurrence of a pressure overshoot can be effectively reduced.

In the case where the radius of the rotor core 31a is at maximum in magnetic pole center parts of the rotor 3 and at minimum in inter-pole parts of the rotor 3, the magnetic flux density at the outer peripheral surface of the rotor 3 is at maximum in magnetic pole center parts and at minimum in inter-pole parts at the outer peripheral surface. That is, as the distance from the magnetic pole center parts toward the inter-pole part decreases, the magnetic flux density at the outer peripheral surface of the rotor 3 decreases. Accordingly, the waveform of an induced voltage in the motor 1 approaches a sine wave, and the torque ripple ratio can be reduced. As a result, occurrence of a pressure overshoot can be suppressed.

### SECOND EMBODIMENT

A compressor 6 according to a second embodiment of the present invention will be described.

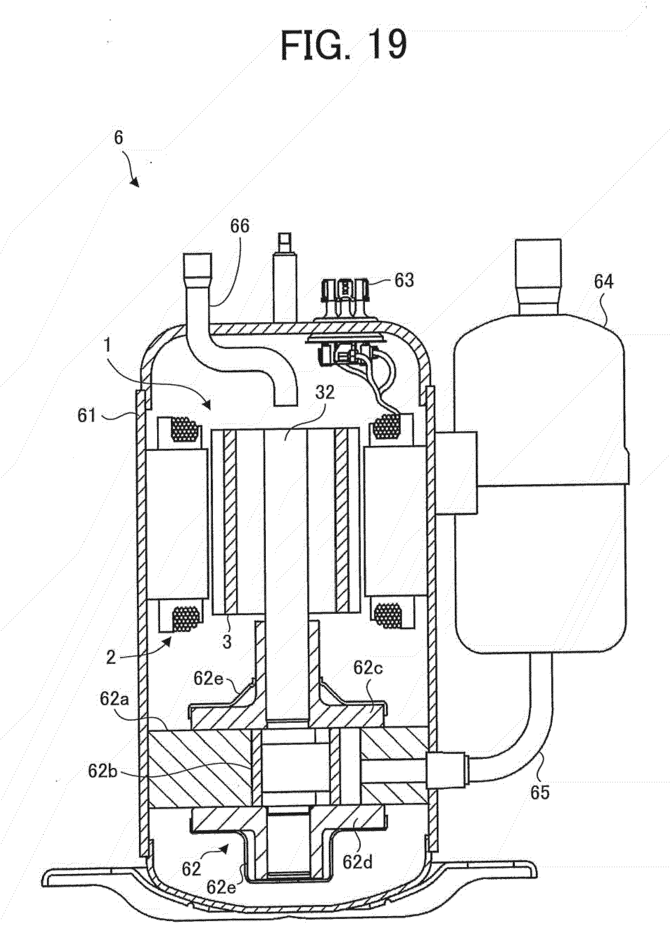

FIG. 19 is a cross-sectional view schematically illustrating a structure of the compressor 6 according to the

### second embodiment.

The compressor 6 includes a motor 1 serving as an electric element, a closed container 61 serving as a housing, and a compression mechanism 62 serving as a compression element (also referred to as a compression device). The compressor 6 is used with the refrigerant described in the first embodiment, that is, a refrigerant containing a substance having a property of causing disproportionation. This refrigerant may be previously provided in the compressor 6. In this embodiment, the compressor 6 is a rotary compressor. The compressor 6 is not limited to a rotary compressor.

The motor 1 in the compressor 6 is the motor 1 described in the first embodiment. The motor 1 drives the compression mechanism 62. In this embodiment, although the motor 1 is an interior permanent magnet motor, but the present invention is not limited to this motor.

The closed container 61 covers the motor 1 and the compression mechanism 62. Refrigerating machine oil for lubricating a sliding part of the compression mechanism 62 is stored in a bottom portion of the closed container 61.

The compressor 6 also includes a glass terminal 63 fixed to the closed container 61, an accumulator 64, a suction pipe 65 for sucking a refrigerant, and a discharge pipe 66 for discharging a refrigerant.

The suction pipe 65 and the discharge pipe 66 are fixed to the closed container 61.

The compression mechanism 62 is disposed inside the closed container 61. In this embodiment, the compression mechanism 62 is disposed in a lower portion of the closed container 61.

The compression mechanism 62 includes a cylinder 62a, a piston 62b, an upper frame 62c (first frame), a lower frame 62d (second frame), and a plurality of mufflers 62e individually attached to the upper frame 62c and the lower frame 62d. The compression mechanism 62 also includes a vane that divides the inside of the cylinder 62a into a suction side and a compression side.

The compression mechanism 62 is driven by the motor 1. The compression mechanism 62 compresses a refrigerant.

The motor 1 is disposed in an upper portion of the closed container 61. Specifically, the motor 1 is located between the discharge pipe 66 and the compression mechanism 62. That is, the motor 1 is disposed above the compression mechanism 62.

The stator 2 of the motor 1 is fixed in the closed container 61 by a fixing method such as press fitting or shrink fitting. The stator 2 may be attached directly to the closed container 61 by welding instead of press fitting or shrink fitting.

The coils (e.g., the coils 27 illustrated in FIG. 1) of the stator 2 of the motor 1 are supplied with electric power through the glass terminal 63.

A rotor (specifically, a shaft 32 of a rotor 3) of the motor 1 is rotatably held by the upper frame 62c and the lower frame 62d with interposition of bearing parts individually included in the upper frame 62c and the lower frame 62d.

The shaft 32 is inserted in the piston 62b. The shaft 32 is rotatably inserted in the upper frame 62c and the lower frame 62d. The upper frame 62c is provided with a valve for preventing a backflow of a refrigerant. Specifically, this valve is located between the upper frame 62c and the muffler 62e. The upper frame 62c and the lower frame 62d close an end face of the cylinder 62a. The accumulator 64 supplies a refrigerant to the cylinder 62a through the suction pipe 65.

Next, an operation of the compressor 6 will be described. The refrigerant supplied from the accumulator 64 enters the cylinder 62a through the suction pipe 65 fixed to the closed container 61. When the motor 1 rotates, the piston 62b fitted in the shaft 32 rotates in the cylinder 62a. Accordingly, the refrigerant is compressed in the cylinder 62a.

The refrigerant flows through the mufflers 62e and moves upward in the closed container 61. When the refrigerant is compressed in the cylinder 62a and the internal pressure of the cylinder 62a reaches a given level or more, the valve provided on the upper frame 62c is opened and thus the compressed refrigerant is discharged from the discharge pipe 66. In this manner, the compressed refrigerant is supplied toward a highpressure side of a refrigeration cycle through the discharge pipe 66. When the internal pressure of the cylinder 62a becomes less than the given level, the valve is closed and thus a flow of the refrigerant is shut off.

Since the compressor 6 according to the second embodiment includes the motor 1 described in the first embodiment, a failure in the compressor 6 is less likely to occur.

### THIRD EMBODIMENT

A refrigeration air conditioning apparatus 7 serving as an air conditioner and including the compressor 6 according to the second embodiment of the present invention will be described.

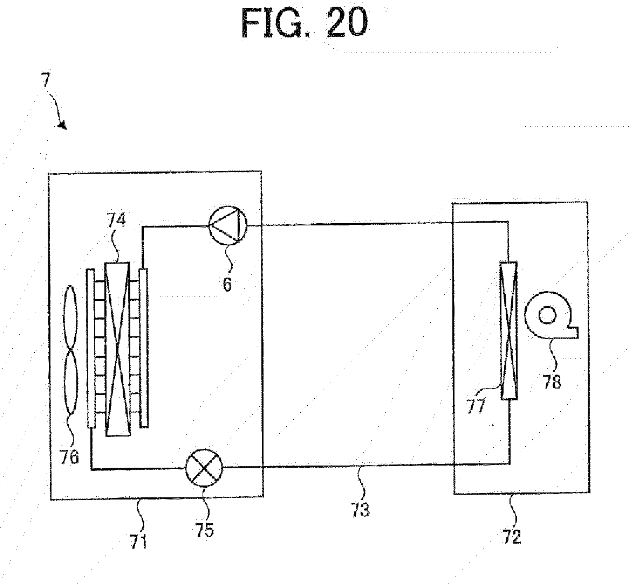

FIG. 20 is a diagram schematically illustrating a configuration of the refrigerating air conditioning device 7 according to a third embodiment.

The refrigeration air conditioning apparatus 7 is capable of performing cooling and heating operations, for example. A refrigerant circuit diagram illustrated in FIG. 20 is an example of a refrigerant circuit diagram of an air conditioner capable of performing a cooling operation.

The refrigeration air conditioning apparatus 7 according to the third embodiment includes an outdoor unit 71, an indoor unit 72, and a refrigerant pipe 73 connecting the outdoor unit 71 and the indoor unit 72 to each other.

The outdoor unit 71 includes a compressor 6, a condenser 74 serving as a heat exchanger, a throttling device 75, and an outdoor air blower 76 (first air blower). The condenser 74 condenses a refrigerant compressed by the compressor 6. The throttling device 75 decompresses the refrigerant condensed by the condenser 74 to thereby adjust a flow rate of the refrigerant. The throttling device 75 will also be referred to as a decompression device.

The indoor unit 72 includes an evaporator 77 serving as a heat exchanger, and an indoor air blower 78 (second air blower). The evaporator 77 evaporates the refrigerant decompressed by the throttling device 75 to thereby cool indoor air.

A basic operation of a cooling operation in the refrigeration air conditioning apparatus 7 will now be described below. In the cooling operation, a refrigerant is compressed by the compressor 6 and the compressed refrigerant flows into the condenser 74. The condenser 74 condenses the refrigerant, and the condensed refrigerant flows into the throttling device 75. The throttling device 75 decompresses the refrigerant, and the decompressed refrigerant flows into the evaporator 77. In the evaporator 77, the refrigerant evaporates, and the refrigerant (specifically a refrigerant gas) flows into the compressor 6 of the outdoor unit 71 again. When the air is sent to the condenser 74 by the outdoor air blower 76, heat moves between the refrigerant and the air. Similarly, when the air is sent to the evaporator 77 by the indoor air blower 78, heat moves between the refrigerant and the air.

The configuration and operation of the refrigeration air conditioning apparatus 7 described above are examples, and the present invention is not limited to the examples described above.

The refrigerating air conditioning device 7 according to the third embodiment has the advantages described in the first and second embodiments.

Since the refrigeration air conditioning apparatus 7 according to the third embodiment includes the compressor 6, a failure in the refrigeration air conditioning apparatus 7 is less likely to occur.

As described above, preferred embodiments have been specifically described. However, it is obvious that those skilled in the art would take various modified variations based on the basic technical idea and teaching of the present invention.

Features of the embodiments and features of the variations described above can be combined as appropriate.

### DESCRIPTION OF REFERENCE CHARACTERS

1 motor, 2 stator, 3 rotor, 6 compressor, 7 refrigeration air conditioning apparatus, 21a yoke part, 22a tooth part, 27 coil, 31 rotor core, 33 permanent magnet, 39 metal member, 61 closed container, 62 compression mechanism, 74 condenser, 77 evaporator, 103 inverter, 223a tooth end surface.

## Claims

1. A stator to be disposed outside a rotor of a motor disposed in a compressor used with a refrigerant containing a substance having a property of causing disproportionation, the stator comprising:
a yoke part; and
N tooth parts, wherein
each of the N tooth parts includes a tooth end surface to face the rotor, and
the stator satisfies 0.75 ≤ (θ1 × N)/360 ≤ 0.97,
where θ1 (degrees) is an angle formed by two lines passing through both ends of the tooth end surface and a rotation center of the rotor in a plane perpendicular to an axial direction of the rotor.

2. The stator according to claim 1, wherein the stator satisfies 0.84 ≤ (θ1 × N)/360 ≤ 0.97.

3. The stator according to claim 1, wherein the stator satisfies 0.75 ≤ (θ1 × N)/360 ≤ 0.925.

4. The stator according to any one of claims 1 to 3, further comprising coils attached to the N tooth parts by distributed winding.

5. The stator according to any one of claims 1 to 4, wherein the substance having the property of causing disproportionation is 1,1,2-trifluoroethylene.

6. The stator according to any one of claims 1 to 4, wherein the substance having the property of causing disproportionation is 1,2-difluoroethylene.

7. A motor comprising:
the stator according to any one of claims 1 to 6; and
the rotor disposed inside the stator.

8. The motor according to claim 7, further comprising an inverter to operate by a pulse width modulation control method and to supply electric power to the stator.

9. The motor according to claim 7 or 8, wherein the rotor is longer than the stator in an axial direction of the rotor.

10. The motor according to any one of claims 7 to 9, wherein the rotor is an interior permanent magnet rotor including a permanent magnet.

11. The motor according to any one of claims 7 to 10, wherein
the rotor includes a rotor core, and a metal member fixed to an end of the rotor core in an axial direction of the rotor, and
a surface area of the metal member is larger than a surface area of the rotor core in the plane perpendicular to the axial direction of the rotor.

12. The motor according to any one of claims 7 to 11, wherein
the rotor includes a rotor core, and
an outer diameter of the rotor core is at maximum in a magnetic pole center part of the rotor, and is at minimum in an inter-pole part of the rotor.

13. A compressor comprising:
a closed container;
a compression device disposed in the closed container; and
the motor according to any one of claims 7 to 12, to drive the compression device.

14. An air conditioner comprising:
the compressor according to claim 13; and
a heat exchanger.
